# EUROPEAN PATENT APPLICATION

(11) **EP 1 260 463 A2**
(43) Date of publication of application: **27.11.2002**
(21) Application number: 02380100.4
(22) Date of filing: 20.05.2002
(51) Int. Cl.: B65G 45/10, B65G 45/24

(54) **A self-cleaning system for transportation members used in the application of adhesives by a continuous system**

(30) Priority: 24.05.2001 ES 200101265
(71) Applicant: Actuality Sistems S.L., 03113 Alicante (ES)
(72) Inventor: Portell Camacho, Carlos, 03113 Alicante (ES); Soto Gonzalez, Jesus, 03113 Alicante (ES); Beaus Navarro, José Luis, 03113 Alicante (ES)
(74) Representative: Gil-Vega, Victor

(57) **Abstract**

The present invention relates to a system whereby it is possible automatically and continuously to clean the transportation elements, conveyor belts or bands (5), used in continuous processes for applying adhesive (1) to articles of any size by means of the installation of a special band (5) formed by parallel wires/threads of non-adhesive material (10) and by implementing a process of four consecutive phases (2,6,7) which subject the adhered residues to partial drying, hardening (6) of the adhesive residues, breaking-up of the surface of the adhesive (7), and removal of the residues by abrasion (8).

## Description

The present invention, as described herein, relates to a system whereby it is possible, automatically and continuously, to clean the transportation elements (conveyor belts or bands) used in continuous processes for applying adhesives to articles of any size.

### BACKGROUND OF THE INVENTION

In continuous processes, it is customary to use conveyor belts or bands which move the various articles being treated through the different phases of the industrial process they have to undergo.

Normally, the customary systems used to clean conveyor belts or bands are based on the installation of brushes or scrapers fixed at various points on the belt or band so that, by friction or scraping, they clean the surface of the belt or band during each pass through this specific point, eliminating possible residues which have remained adhered to it.

In all industrial sectors, the automatic application of adhesive substances for joining articles, a metal coating, paint or any other coating which involves joining to substances or materials has a concommitant high maintenance cost since the purpose of these adhesive substances is for these to be adhered to another material (coating) or for these adhesive substances to be joined to a surface in order for the latter to be anchored in turn to another surface (adhesion of surfaces by means of adhesive), and therefore their principal characteristic is their ability to adhere to any substrate they are deposited upon.

Although satisfactory for its purpose, this characteristic causes a problem of maintenance and of cleaning the various parts of the transportation elements used in continuous processes, making it much more difficult to start up continuous automatic systems for said processes owing to the frequent interruptions for cleaning on account of obstruction of the belts.

### DESCRIPTION OF THE INVENTION

The problem of cleaning the transportation elements when adhesives are used presents two principal difficulties: firstly, the actual adhesion of the product; and, secondly, the slow speed at which the solvent dries, which means that, as it remains wet, scraping of the transportation elements in order to clean them is ineffective.

The invention described therefore advocates the installation of continuous cleaning elements, namely special scrapers which are effective even in the case of highly adhesive products, and, moreover, the drying of the adhesive residues so that the action of these scrapers is effective.

To this end, on a continuous-process installation for the application of adhesives to articles, composed of a conveyor belt, automatic adhesive-application guns, drying heater and reactivation chamber and mounting zone. [sic]

Of all the parts of which a continuous process for the application of adhesives may be composed, the problem of effective cleaning arises in the section over which the adhesives are applied, normally with diffuser guns, and, precisely for this reason, the excess adhesive diffused by the guns gives rise not only to the articles to be impregnated being covered with the adhesive but also to the belt conveying said articles being impregnated with adhesive.

The section where adhesive is applied in continuous processes is usually the first section and, to solve the problem of automatic cleaning, it is proposed that the conveyor belt on which the adhesive will be applied is installed in the form of a continuous band formed by parallel wires/threads of non-adhesive material (nylon, Teflon, EPDM, etc.), preferably with a cylindrical or triangular cross section. The use of a band made from wires/threads is justified because, since it offers a smaller surface area, the amount of adhesive deposited on the wires/threads is less and the scraping operation is in turn much more effective with a comb-type scraper to whose action each one of the wires/threads is subjected.

In order to achieve effective cleaning, the band of the conveyor belt which has the above characteristic of being formed by parallel wires/threads has to undergo a series of processes aimed at achieving optimum performance on the part of the cleaning elements, and these are, in sequence:
1. Partial drying of the solvent deposited on the belt: to this end, a flow of hot air will be supplied by means of a fan, the air being heated by resistance elements, for example.
2. Next, the belt, as it passes, is subjected to a strong flow of cold air in order to eliminate the solvent residue and to harden the adhesive residues deposited on the wires/threads of the conveyor belt. The adhesive is dried and hardened prior to its removal by means of physical actions as a response to a phenomenon as well known as the fact that a dry sludge is detached more easily from a surface than a wet sludge.
3. Breaking up the surfae of the adhesive or coating deposited on the surface of the conveyor belt: upon breaking the continuity of the layer of adhesive deposited on the wires/threads, the adhesive is successfully and easily detached. The adhesive force is directly proportional to the surface area covered by the adhesive and smaller, discontinuous pieces are detached more easily than are large pieces. This action is achieved by means of the use of physical actions on the wires/threads, involving either impact or friction. This may be achieved with an impact roller, ball roller, or combs with a V or U cross section over which the wires/threads slide.
4. Final removal of the adhesive residues by means of mechanical abrasion: this effect may be achieved by passing the wires/threads through a spike brush.

These four phases that are defined are installed sequentially on the conveyor belt so that, in their continuous movement, the wires/threads which make up the transportation surface pass successively through each one of the phases, thereby making it possible to keep our gluing chain clean and uninterrupted during more hours of operation.

### BRIEF DESCRIPTION OF THE DRAWINGS

For a better understanding of the description given herein, there are accompanying drawings in which, solely by way of example, a practical embodiment of the automatic cleaning system for transportation elements used in the application of adhesives by means of a continuous system is represented.

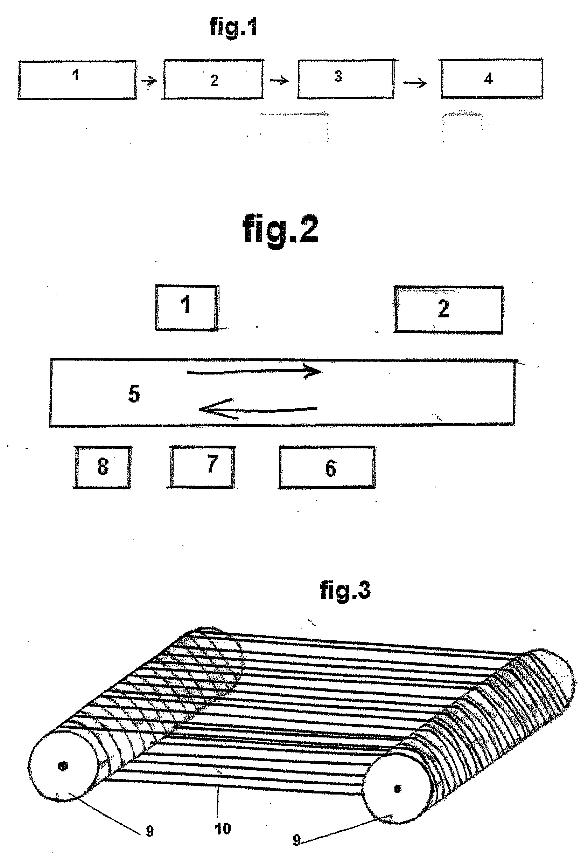

Fig. 1 shows a general view of a diagram representing an example of a continuous adhesive-application process, with the various phases thereof being differentiated, in which (1) would be the adhesive-application phase, (2) the drying phase at 80°C, (3) reactivation zone at 180°C, and (4) mounting or assembly zone.
Figure 2 shows a diagram representing the various phases for automatically cleaning the adhesive-application belt, which would be those affecting zone (1) and (2) in Fig. 1, with arrow indication of the direction of rotation of the belt, in which (5) is the conveyor belt, (1) is the adhesive-application zone (diffuser guns), (2) is the first phase of the process, automatic cleaning and partial drying, (6) is the second phase, drying and hardening, (7) is the third phase, breaking up the surface of the adhesive, and (8) is the fourth and last phase, final removal by abrasion.
Fig. 3 shows a detail of the band of wires/threads with their grooved drums, in which (9) are the drums and (10) the wires/threads which form the conveyor band.

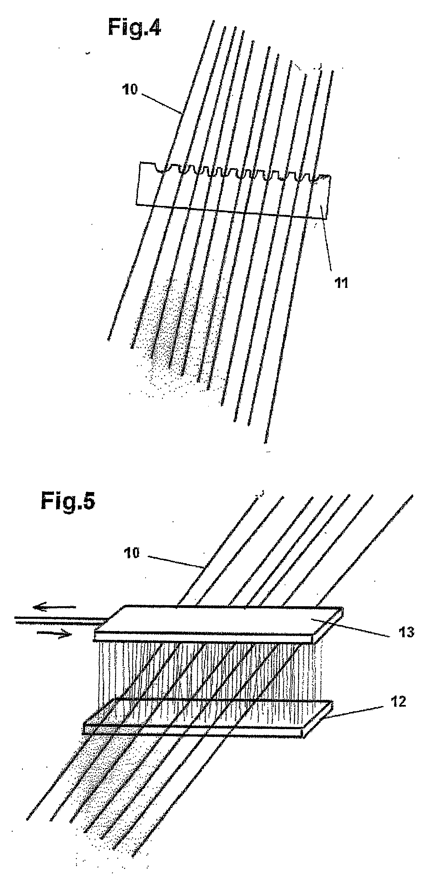

Fig. 4 shows a detail of the friction comb which may be used in phase 3 of the automatic cleaning process, in which (10) are the wires/threads which form the conveyor band and (11) is the scraper comb.
Fig. 5 shows a detail of the spike brush which is used in phase 4 of the process, with the upper plate having reciprocal movement in order to detach the adhesive residues from the brush, in which (10) are the wires/threads of the band, (12) is the spike brush and (13) the reciprocal plate.

### DESCRIPTION OF A PREFERRED EMBODIMENT

The automatic cleaning system for transportation elements used in the application of adhesives by means of a continuous system may be embodied by means of an endless belt over a steel frame and having two grooved rotational drums, one at each end, one of which is the drive drum. The band of this belt is formed with parallel wires/threads of non-adhesive material, such as wires/threads of nylon or Teflon, and the drums have as many grooves as the band has wires/threads, and they have a screw-based tensioning system.

Just like the entire process, the belt may be controlled by means of a computer and electronic cells which detect the presence of material on the band in order automatically to actuate the adhesive-diffusing guns.

The adhesive-metering guns are installed on a bridge installed over the belt and approximately one metre from its start. In this zone is installed a system for capturing air by means of aspiration, with the aim that the adhesive residues are not scattered out into the environment. The air captured by means of an aspirating device installed under the belt is conveyed to a filter which is formed by a stainless-steel rectangular box and which has an intermediate partition defining two chambers. The first of these is filled with water and is the one through which the air from the aspirating device enters. The second, without water, has a grill for retaining adhesive residues which have not been retained by the water in the first chamber, preventing said residues from reaching the blades of the aspirating device placed after the filter. The functioning of the water filter is of the scrubber type.

After this zone and on the band is installed a bridge-type chamber made from enamelled metal sheet. This chamber, responsible for phase 1 of the process ("Partially drying the solvent") contains electrical resistance elements, and a flow of air impelled by a fan installed on the chamber is circulated across them in order to be heated. The temperature will be approximately 80°C. This air is projected onto the wires/threads of the conveyor belt in order to dry the adhered adhesive residues.

Next, and in the lower part of the return zone or belt is installed another chamber, also made from enamelled metal sheet. This chamber is responsible for part 2 of the process ("Drying and hardening the adhesive residues deposited on the band"). This chamber concentrates on the wires/threads of the conveyor belt a strong flow of cold air supplied by a fan at ambient temperature or by means of a cooler if necessary.

Next, and in the lower zone of the return zone or belt is installed a steel comb with U or V cross sections, depending on whether the wires/threads used in the band are cylindrical or triangular, so that each one of the wires/threads passes through, causing friction, as tightly as possible. This will be responsible for phase 3 of the process ("Breaking up the surface of the adhesive deposited on the wires/threads and removing part of it").

Next, and also in the lower zone is installed a brush with densely-packed long steel spikes, the wires/threads of the band passing between the brush spikes. In the upper part of the spikes and in contact therewith is installed a plate which, actuated by a connecting rod, moves to and fro, continuously displacing the spikes, and causing the cleaned-off adhesive to detach from them and to fall into a container for removal. This would be the one responsible for phase 4 of the process ("Final removal of the adhesive residues").

Next would be installed all the remaining phases of the process for mounting the articles to be glued.

## Claims

1. Automatic cleaning system for transportation elements used in the application of adhesives by means of a continuous system which, being of the type using an endless conveyor belt on which cleaning scrapers or accessories have been installed, **characterized by** having a band formed by parallel wires/threads of non-adhesive material and in that the band of wires/threads for automatic cleaning thereof undergoes four sequential phases: firstly, partial drying of the solvent, secondly, drying of the solvent and hardening of the adhesive residues, thirdly, breaking up of the adhesive residue surface, and, fourthly, total removal of the adhesive residues.

2. Automatic cleaning system for transportation elements used in the application of adhesives by means of a continuous system according to Claim 1, **characterized in that** the wires/threads of non-adhesive material which form the conveyor band may have a cylindrical or triangular cross section.

3. Automatic cleaning system for transportation elements used in the application of adhesives by means of a continuous system according to Claim 1, **characterized in that** phase 1 of the process takes place with the use of hot air.

4. Automatic cleaning system for transportation elements used in the application of adhesives by means of a continuous system according to Claim 1, **characterized in that** phase 2 of the process takes place with the use of cold air.

5. Automatic cleaning system for transportation elements used in the application of adhesives by means of a continuous system according to Claim 1, **characterized in that** phase 3 of the process takes place with the use of scrapers, brushes, impact rollers or ball cylinders.

6. Automatic cleaning system for transportation elements used in the application of adhesives by means of a continuous system according to Claim 1, **characterized in that** phase 4 of the process takes place with the use of brushes or any other abrasion system.

7. Automatic cleaning system for transportation elements used in the application of adhesives by means of a continuous system according to the preceding claims, **characterized in that** the entire process may be controlled by means of a computer and may be incorporated into any other process where a continuous automatic cleaning system for a conveyor belt on which adhesive materials are spread is required, it being possible for the length and width of the belt to be varied as the function of the articles to be treated.
